# EUROPÄISCHE PATENTANMELDUNG

(11) **EP 0 819 574 A2**
(43) Veröffentlichungstag der Anmeldung: **21.01.1998**
(21) Anmeldenummer: 97111127.3
(22) Anmeldetag: 03.07.1997
(51) Int. Cl.: B60N 2/48

(54) **Kopfstütze für Kraftfahrzeuge**

(30) Priorität: 19.07.1996 DE 29612504 U
(71) Anmelder: R. SCHMIDT GMBH, D-57368 Lennestadt (DE)
(72) Erfinder: Schmidt, Reinhard, D-57368 Lennestadt (DE)
(74) Vertreter: Köchling, Conrad, Dipl.-Ing.

(57) **Zusammenfassung**

Um eine Kopfstütze für Kraftfahrzeuge, bestehend aus einem hohlen Gehäuseteil, insbesondere aus Kunststoff, das Raststangen oder dergleichen Haltemittel haltert, mittels derer die Kopfstütze an der Rückenlehne eines Sitzes oder an der Hutablage hinter Rücksitzen, insbesondere höhenverstellbar fixierbar ist, wobei das Gehäuseteil außenseitig mit Schaumstoff gepolstert und mit einem die Polsterung überdeckenden Bezug versehen ist, zu schaffen, die bei leichtem Aufbau eine preiswerte Fertigung ermöglicht, wird vorgeschlagen, daß das Gehäuseteil ein elastischer Hohlkörper (1) ist, dessen Form einer Verkleinerung der Kopfstütze entspricht, und daß der Bezug (2), insbesondere textile Bezugsstoff, innenseitig mit Schaumstoff (3) beschichtet und um den Hohlkörper (1) gelegt ist und diesen zur Sollform der Kopfstütze ergänzt.

## Beschreibung

Die Erfindung betrifft eine Kopfstütze für Kraftfahrzeuge, bestehend aus einem hohlen Gehäuseteil, insbesondere aus Kunststoff, das Raststangen oder dergleichen Haltemittel haltert, mittels derer die Kopfstütze an der Rückenlehne eines Sitzes oder an der Hutablage hinter Rücksitzen, insbesondere höhenverstellbar fixierbar ist, wobei das Gehäuseteil außenseitig mit Schaumstoff gepolstert und mit einem die Polsterung überdeckenden Bezug versehen ist.

Eine derartige Kopfstütze ist beispielsweise aus der DE 43 37 145 A1 bekannt. Dabei besteht das hohle Gehäuseteil aus Kunststoff aus zwei Halbschalen, die miteinander verclipst, verschweißt oder klebverbunden sind. Die Halbschalen (das Gehäuseteil) haltern zusätzlich die Raststangen oder Schubstangen, mittels derer die Kopfstütze an entsprechenden Einbauteilen des Kraftfahrzeuges befestigbar ist.

Eine solche Kopfstütze ist vollständig im Umfangsbereich mit Schaumstoff gepolstert und mit einem texilen Überzug versehen. Zur Anordnung des Schaumstoffes und Bezuges ist es erforderlich, die Teile entsprechend zuzuschneiden und zunächst den Schaumstoff an dem Gehäuseteil anzukleben, um dann nachträglich den Bezugsstoff (vorzugsweise textilen Bezugsstoff) überziehen zu können und den Bezugsstoff zu vernähen.

Die Ausbildung ist relativ kostenintensiv, da zunächst das Gehäuseteil gefertigt werden muß, der Schaumstoff in Form von Bahnen oder dergleichen vorgefertigt werden muß und dann der Schaumstoff ebenso wie das textile Bezugsmaterial zugeschnitten werden muß. Desweiteren muß der Schaumstoff dann auf das Gehäuseteil aufgeklebt werden und anschließend der Bezugsstoff aufgebracht und fixiert werden.

Ausgehend von diesem Stand der Technik liegt der Erfindung die Aufgabe zugrunde, eine Kopfstütze gattungsgemäßer Art zu schaffen, die bei leichtem Aufbau eine preiswerte Fertigung ermöglicht.

Zur Lösung dieser Aufgabe wird vorgeschlagen, daß das Gehäuseteil ein elastischer Hohlkörper ist, dessen Form einer Verkleinerung der Kopfstütze entspricht, und daß der Bezug, insbesondere textile Bezugsstoff, innenseitig mit Schaumstoff beschichtet und um den Hohlkörper gelegt ist und diesen zur Sollform der Kopfstütze ergänzt.

Das Gehäuseteil kann vorzugsweise ein einteiliger oder auch mehrteiliger Hohlkörper aus Kunststoff sein, der eine ausreichende Eigenelastizität aufweist. Der Hohlkörper weist dabei die verkleinerte Form der Sollkontur der Kopfstütze auf. Zur Polsterung und Verkleidung des Hohlkörpers ist der Bezug vorgesehen, der innenseitig mit Schaumstoff beschichtet ist, so daß er eine Handhabungseinheit mit dem Schaumstoffelement bildet. Das Schaumstoffelement muß nicht an der Außenfläche des Hohlkörpers angeklebt werden, sondern es ist möglich, den Bezug samt Schaumstoffbeschichtung auf den Hohlkörper aufzubringen und um diesen anzuordnen und in geeigneter Weise an den Hohlkörper zu fixieren. Beispielsweise kann der Hohlkörper vollständig von dem mit Schaumstoff beschichteten Bezugsstoff umgeben sein. Es ist aber auch möglich, nur ausgewählte Bereiche, die der Polsterung bedürfen, mit Bezugsstoff zu versehen, der innenseitig mit Schaumstoff beschichtet ist. Der Schaumstoff und der textile Bezugsstoff sind Flächenelemente, die über ihre gesamte Erstreckung vorzugsweise gleichbleibende Materialdicke aufweisen, so daß beim Aufbringen des Bezugsstoffes samt Schaumstoff auf den Hohlkörper die Sollkontur der Kopfstütze insgesamt auf Sollmaß vergrößert wird, aber die Grundform des gegenüber der Sollform verkleinerten Hohlkörpers beibehalten bleibt.

Bevorzugt ist vorgesehen, daß der Schaumstoff auf den Bezug innenseitig aufkaschiert ist. Durch die erfindungsgemäße Ausbildung ist die Herstellung einer solchen Kopfstütze erheblich vereinfach und damit kostengünstig durchzuführen. Zudem ist ein insgesamt leichtes Bauteil geschaffen, welches das Gesamtgewicht des damit ausgerüsteten Fahrzeuges nur gering belastet.

Ein Ausführungsbeispiel der Erfindung ist in der Zeichnung dargestellt und im folgenden näher beschrieben. Es zeigt:
- Fig. 1: Eine Kopfstütze im Schnitt I-I der Figur 2 gesehen;
- Fig. 2: desgleichen im Schnitt II-II der Figur 1 gesehen.

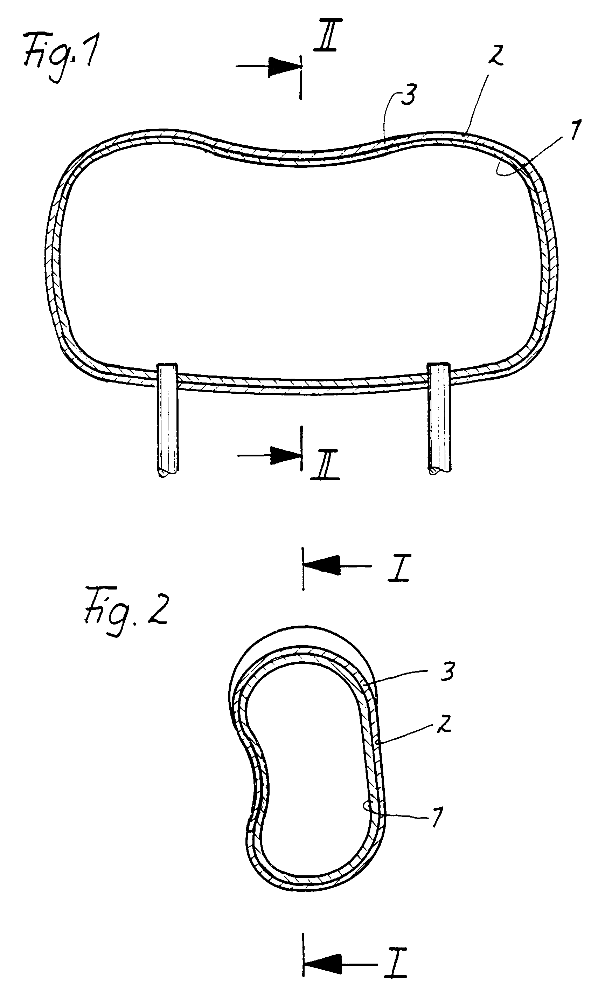

Die Kopfstütze besteht aus einem Gehäuseteil aus Kunststoff in Form eines elastischen Hohlkörpers 1, dessen Form einer exakten Verkleinerung der Kopfstütze in ihrer Endform entspricht. Der Hohlkörper 1 ist mit einem Bezug 2 aus textilem Material außenseitig bezogen, wobei der Bezug innenseitig mit Schaumstoff 3 beschichtet ist. Der aus den Bestandteilen 2 und 3 bestehende Bezug ist außenseitig um den Hohlkörper 1 gelegt und ergänzt diesen zur Sollform der Kopfstütze. Der Bezug kann in üblicher Weise fixiert werden, beispielsweise durch vernähen der Randkanten geschlossen werden oder auch durch geeignete Clipselemente mit dem Hohlkörper 1 verbunden werden.

Vorzugsweise ist der Schaumstoff 3 innenseitig auf den Bezug 2 aufkaschiert.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

## Patentansprüche

1. Kopfstütze für Kraftfahrzeuge, bestehend aus einem hohlen Gehäuseteil, insbesondere aus Kunststoff, das Raststangen oder dergleichen Haltemittel haltert, mittels derer die Kopfstütze an der Rückenlehne eines Sitzes oder an der Hutablage hinter Rücksitzen, insbesondere höhenverstellbar fixierbar ist, wobei das Gehäuseteil außenseitig mit Schaumstoff gepolstert und mit einem die Polsterung überdeckenden Bezug versehen ist, dadurch gekennzeichnet, daß das Gehäuseteil ein elastischer Hohlkörper (1) ist, dessen Form einer Verkleinerung der Kopfstütze entspricht, und daß der Bezug (2), insbesondere textile Bezugsstoff, innenseitig mit Schaumstoff (3) beschichtet und um den Hohlkörper (1) gelegt ist und diesen zur Sollform der Kopfstütze ergänzt.

2. Kopfstütze nach Anspruch 1, dadurch gekennzeichnet, daß der Schaumstoff (3) auf den Bezug (2) innenseitig aufkaschiert ist.
